# EUROPEAN PATENT APPLICATION

(11) **EP 3 048 843 A1**
(43) Date of publication of application: **27.07.2016**
(21) Application number: 16152397.2
(22) Date of filing: 22.01.2016
(51) Int. Cl.: H04W 72/00, H04L 29/08

(54) **MIGRATING AN APPLICATION PROVIDING LATENCY CRITICAL SERVICE**

(30) Priority: 23.01.2015 US 201514603888
(71) Applicant: Tieto Oyj, 00441 Helsinki (FI)
(72) Inventor: FORSMAN, Johan, 90339 Umeå (SE)
(74) Representative: Papula Oy

(57) **Abstract**

According to an aspect of the invention there is provided a computer system comprising an application at a source execution context for providing latency critical services. The application module comprises a lower layer protocol module for receiving real-time critical data units from a transceiver and for sending real-time critical data units to the transceiver; an upper layer protocol module for receiving information from the lower layer protocol module and for providing information to be sent to the lower layer protocol module; and a scheduling module for dynamically controlling transmission of data units to the transceiver and reception of data units from the transceiver with the lower layer protocol module and the upper layer protocol module; wherein responsibilities of at least one of the lower layer protocol module, upper layer protocol module and scheduling module are configured to be migrated module by module to respective modules in a destination application at a destination execution context.

## Description

### BACKGROUND OF THE INVENTION

Real-time operation is a requirement in many service environments, for example, in telecommunication services. For example, when a base station or an application running in the base station provides its services to user equipment, it provides a latency critical service. Sometimes it may happen that the base station or the application in the base station cannot maintain the required service quality level.

In these situations it may be necessary to migrate the application from a source execution context to a new execution context, i.e. destination execution context, for example, in order to be able to maintain the required service quality level. The challenge in the migration process is that the downtime of the service (i.e. the time period during which the application cannot provide the service) should be negligible or as short as possible.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

According to one example embodiment, there is provided a computer system comprising a source application for providing latency critical services. The source application comprises a lower layer protocol module for receiving real-time critical data units from a transceiver and for sending real-time critical data units to the transceiver; an upper layer protocol module for receiving information from the lower layer protocol module and for providing information to the lower layer protocol module; and a scheduling module for dynamically controlling transmission of data units to the transceiver and reception of information from the transceiver with the lower layer protocol module and the upper layer protocol module; wherein responsibilities of at least one of the lower layer protocol module, upper layer protocol module and scheduling module are configured to be migrated module by module to respective modules in a destination application.

Transmission and reception may refer to transmission and reception of information related, for example, to real-time services that is passing through a transceiver between user equipment and a base station.

In one embodiment, the lower layer protocol module, the upper layer protocol module and the scheduling module are provided by the source application executed in single source execution context, and the lower layer protocol module, upper layer protocol module and scheduling module are configured to be migrated module by module to the destination application executed in a single destination execution context.

In one embodiment, alternatively or in addition, the modules of the source application are provided by the source application distributed in at least two source executions contexts, and the lower layer protocol module, upper layer protocol module and scheduling module are configured to be migrated module by module to the destination application executed in a single destination execution context.

In one embodiment, alternatively or in addition, the lower layer protocol module, the upper layer protocol module and the scheduling module are provided by the source application executed in single source execution context, and the lower layer protocol module, upper layer protocol module and scheduling module are configured to be migrated module by module to the destination application distributed in multiple destination execution contexts.

In one embodiment, alternatively or in addition, the lower layer protocol module, the upper layer protocol module and the scheduling module are provided by the source application distributed in multiple source execution contexts, and the lower layer protocol module, upper layer protocol module and scheduling module are configured to be migrated module by module to the destination application distributed in multiple destination execution contexts.

In one embodiment, alternatively or in addition, the lower layer protocol module comprises a lower layer protocol receiver module for receiving the real-time critical data units from the transceiver; and a lower layer protocol transmitter module for transmitting the real-time critical data units to the transceiver.

In one embodiment, alternatively or in addition, the scheduling module is configured to control the lower layer protocol module to receive information from the transceiver and to control the upper layer protocol module to transmit information to the transceiver via the lower layer protocol module.

In one embodiment, alternatively or in addition, the scheduling module is configured to control the lower layer protocol module to receive information from the transceiver and to control the lower layer protocol module to transmit information to the transceiver.

According to another example embodiment, there is provided a computer system for migrating a source application providing latency critical services. The computer system comprises a migration controller module; a source application comprising a source lower layer protocol module for receiving real-time critical data units from a transceiver and for sending real-time critical data units to the transceiver, a source upper layer protocol module for receiving information from the lower layer protocol module and for providing information to the lower layer protocol module; and a source scheduling module for dynamically controlling transmission of data units to the transceiver and reception of data units from the transceiver with the lower layer protocol module and the upper layer protocol module; and a destination application comprising a destination lower layer protocol module for receiving real-time critical data units from the transceiver and for sending real-time critical data units to the transceiver, a destination upper layer protocol module for receiving information from the lower layer protocol module and for providing information to the lower layer protocol module; and a destination scheduling module for dynamically controlling transmission of data units to the transceiver and reception of data units from the transceiver with the lower layer protocol module and the upper layer protocol module. The migration controller module is configured to select at least one of the source lower layer protocol module, source upper layer protocol module and source scheduling module; and cause migration of the responsibilities of the selected source modules module by module to respective modules at the destination application.

In one embodiment, the source lower layer protocol module, the source upper layer protocol module and the source scheduling module are provided by the source application executed in single source execution context, and the source lower layer protocol module, the source upper layer protocol module and the source scheduling module are configured to be migrated module by module to the destination application executed in a single destination execution context.

In one embodiment, alternatively or in addition, the modules of the source application are provided by the source application distributed in multiple source executions contexts, and the source lower layer protocol module, the source upper layer protocol module and the source scheduling module are configured to be migrated module by module to the destination application executed in a single destination execution context.

In one embodiment, alternatively or in addition, the source lower layer protocol module, the source upper layer protocol module and the source scheduling module are provided by the source application executed in single source execution context, and the source lower layer protocol module, the source upper layer protocol module and the source scheduling module are configured to be migrated module by module to the destination application distributed in multiple destination execution contexts.

In one embodiment, alternatively or in addition, the source lower layer protocol module, the source upper layer protocol module and the source scheduling module are provided by the source application distributed in multiple source execution contexts, and the source lower layer protocol module, the source upper layer protocol module and the source scheduling module are configured to be migrated module by module to the destination application distributed in multiple destination execution contexts.

In one embodiment, alternatively or in addition, the migration controller is configured to cause transmission of a snapshot of the state of the lower layer protocol module to the destination lower layer protocol module; the migration controller is configured to cause synchronization of the transmission from lower layer protocol module in the destination execution context with the transmission from the lower layer protocol module in the source execution context; and the source scheduling module or destination scheduling module is configured to control when the source lower layer protocol module or the destination lower layer protocol module is responsible for sending data units to the transceiver.

In one embodiment, alternatively or in addition, the source scheduling module or destination scheduling module is configured to control the source upper layer protocol module to provide information to the source lower layer module at transmission time interval N; and to control the source upper layer protocol module to provide information to the destination lower layer module at transmission time interval N+1.

In one embodiment, alternatively or in addition, the computer system further comprises a switch configured to receive real-time critical data units. The source scheduling module or destination scheduling module is configured to control the source upper layer protocol module to provide information to the source lower layer module and to the destination lower layer module; wherein the source lower layer module and the destination lower layer module are configured to send real-time critical data units to the switch; and wherein the switch is configured to send the real-time critical data units from the source lower layer module or from the destination lower layer module to the transceiver. The switch may forward data units from the source lower layer module to the transceiver for transmission time interval N and forward data units from the destination lower layer module to the transceiver for transmission time interval N+1.

In one embodiment, alternatively or in addition, the source scheduling module or destination scheduling module is configured to control the source upper layer protocol module to provide information to the source lower layer module and to the destination lower layer module; wherein the source lower layer protocol module and the destination lower layer protocol module are configured to send real-time critical data units to the transceiver. The transceiver may select data units from the source lower layer protocol module for transmission time interval N and select data units from the destination lower layer module for transmission time interval N+1.

In one embodiment, alternatively or in addition, the migration controller is configured to cause transmission of a snapshot of the state of the lower layer protocol module to the destination lower layer protocol module; the transceiver is configured to forward data units to the source lower layer protocol module for transmission time interval N and to forward data units to the destination lower layer protocol module for transmission time interval N+1; and wherein the source scheduling module or the destination scheduling module is configured to control the source lower layer protocol module to be responsible for receiving data units from the transceiver for transmission time interval N; and control the destination lower layer protocol module to be responsible for receiving data units from the transceiver for transmission time interval N + 1.

In one embodiment, alternatively or in addition, the migration controller is configured to cause transmission of a snapshot of the state of the lower layer protocol module to the destination lower layer protocol module; the transceiver is configured to forward data units to the source lower layer protocol module and to the destination lower layer protocol module; and wherein the source scheduling module or the destination scheduling module is configured to control the source lower layer protocol module to be responsible for receiving data units from the transceiver for transmission time interval N; and control the destination lower layer protocol module to be responsible for receiving data units from the transceiver for transmission time interval N + 1.

In one embodiment, alternatively or in addition, the migration controller is configured to cause transmission of a snapshot of the state of the source scheduling module to the destination scheduling module; the migration controller is configured to synchronize the timing of the destination scheduling module with the timing of the source scheduling module; and the destination scheduling module is configured to determine when to take over responsibilities of the source scheduling module.

In one embodiment, alternatively or in addition, the migration controller is configured to cause transmission of a snapshot of the state of the source upper layer protocol module to the destination upper layer protocol module; wherein the migration controller is configured to cause the destination execution context to take over the responsibility of protocol processing; wherein the source upper layer protocol module is configured to forward information to the destination upper layer protocol module; and wherein the destination upper layer protocol module is configured to initiate a path switch from the source upper layer protocol module to the destination upper layer protocol module.

In one embodiment, alternatively or in addition, the lower layer protocol module comprises a lower layer protocol receiver module for receiving the real-time critical data units from the transceiver and a lower layer transmitter module for sending the real-time critical data units to the transceiver.

In one embodiment, alternatively or in addition, the source and destination scheduling modules are configured to control respective lower layer protocol modules to receive information from the transceiver and to control respective upper layer protocol modules to transmit information to the transceiver via the respective lower layer protocol modules.

In one embodiment, alternatively or in addition, the source and destination scheduling modules are configured to control respective lower layer protocol modules to receive information from the transceiver and to control the respective lower layer protocol modules to transmit information to the transceiver.

In one embodiment, alternatively or in addition, the source scheduling module is configured to control at least one of the destination lower layer protocol module and the destination upper layer protocol module during the migration phase.

In one embodiment, alternatively or in addition, the destination scheduling module is configured to control at least one of the source lower layer protocol module and the source upper layer protocol module during the migration phase.

According to another example embodiment, there is provided a method for migrating a source application providing latency critical services in a computer system. The computer system comprises a migration controller module; a source application comprising a source lower layer protocol module for receiving real-time critical data units from a transceiver and for sending real-time critical data units to the transceiver, a source upper layer protocol module for receiving information from the lower layer protocol module and for providing information to the lower layer protocol module; and a source scheduling module for dynamically controlling transmission of data units to the transceiver and reception of data units from the transceiver with the source lower layer protocol module and the source upper layer protocol module; and a destination application comprising a destination lower layer protocol module for receiving real-time critical data units from the transceiver and for sending real-time critical data units to the transceiver, a destination upper layer protocol module for receiving information from the lower layer protocol module and for providing information to the lower layer protocol module; and a destination scheduling module for dynamically controlling transmission of data units to the transceiver and reception of data units from the transceiver with the destination lower layer protocol module and the destination upper layer protocol module. During a migration phase, the migration controller module selects at least one of the source lower layer protocol module, source upper layer protocol module and source scheduling module; and causes migration of the responsibilities of the selected source modules module by module to respective modules at the destination application.

Many of the attendant features will be more readily appreciated as they become better understood by reference to the following detailed description considered in connection with the accompanying drawings.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**Figure 1A** is a block diagram of an example of an application providing latency critical service.
**Figure 1B** is a block diagram of an example of an application providing latency critical service.
**Figure 1C** is a block diagram of an example of an application providing latency critical service.
**Figure 1D** is a block diagram of an example of an application providing latency critical service.
**Figure 2A** is a block diagram of a computer system for migrating a source application providing latency critical services.
**Figure 2B** is another block diagram of a computer system for migrating a source application providing latency critical services.
**Figure 3** is a flow diagram illustrating migration of the responsibility of transmitting data units to a transceiver from a source execution context to a destination execution context.
**Figure 4** is a flow diagram illustrating migration of the responsibility of receiving data units sent by a transceiver from a source execution context to a destination execution context.
**Figure 5** is a flow diagram illustrating migration of the responsibility of an upper layer protocol processing from a source execution context to a destination execution context.
**Figure 6** is a flow diagram illustrating migration of the responsibility of scheduling module from a source execution context to a destination execution context.
**Figure 7A** illustrates an example of migrating a scheduling module, an upper layer protocol module, a lower layer protocol receiver module and a lower layer protocol transmitter module from a source execution context to a destination execution context.
**Figure 7B** illustrates another example of migrating a scheduling module, an upper layer protocol module, a lower layer protocol receiver module and a lower layer protocol transmitter module from a source execution context to a destination execution context.
**Figure 8** illustrates an example of an environment of migrating an application providing latency critical service.

### DETAILED DESCRIPTION

The detailed description provided below in connection with the appended drawings is intended as a description of the present examples and is not intended to represent the only forms in which the present example may be constructed or utilized. However, the same or equivalent functions and sequences may be accomplished by different examples.

Although the present examples may be described and illustrated herein as being implemented as a base station application or application module, this is only one example of possible implementation environments and not a limitation. As those skilled in the art will appreciate, the present examples are suitable for any application module at a source execution context handling real-time critical data and where the application module needs to be migrated to a destination execution context.

Further, in the following terms "upper layer" and "lower layer" are frequently used. For example, a Long Term Evolution (LTE) base station includes a chain of protocols that are processing from left to right in the picture. On the left there is a transport interface with the Transmission Control Protocol (TCP)/Internet Protocol (IP) protocol stack. In the middle there are transport tunneling protocols on the left side and LTE radio interface layer 2 processing on the right side for the user plane. For the control plane there are control plane protocols instead of the transport tunneling protocols. Far to the right there are LTE radio interface layer 1 processing. There are several alternatives where this chain is divided between the "upper layer" and "lower layer". In another example environment, the Wideband Code Division Multiple Access (WCDMA) may have an Asynchronous Transfer Mode (ATM) based protocol stack in addition of the TCP/IP protocol stack.

In one example, it could be so that the complete LTE layer 1 and 2 is part of the lower layer. In another example, the LTE layer 2 is divided into sub-layers. It could be so that it is selected to have lower sub-layers in the right part and upper sub-layers in the left part. The chain may not be divided at the exact same position for the transmitting part as the receiving part of the chain. In another example, it could be so that the complete layer 2 and parts of layer 1 are part of the upper layer. The lower layer will then only include lower parts of layer 1. In another example, it could be so that the complete layer 2 is part of the upper layer together with the transport protocols (TCP/IP), while layer 1 is part of the lower layer.

In one example, there is a lower layer for the LTE radio interface and another lower layer for the transport interface.

In one example, the control plane may be in the same upper layer protocol module as the user plane. Alternatively, the control plane may be in a separate upper layer protocol module as the user plane.

In the above, LTE has been used as an example of an execution context environment. It is noted that the solution disclosed here may be used in any other execution context environment which performs real-time critical tasks.

Further, in some examples, the control plane may reside in the same upper layer entity as the user plane, or alternatively, in a separate upper layer entity.

In the following examples the term "data unit" may be used refer to information sent between two entities. The data unit may refer to information transmitted as a serial stream, a frame, a data packet, a datagram etc.

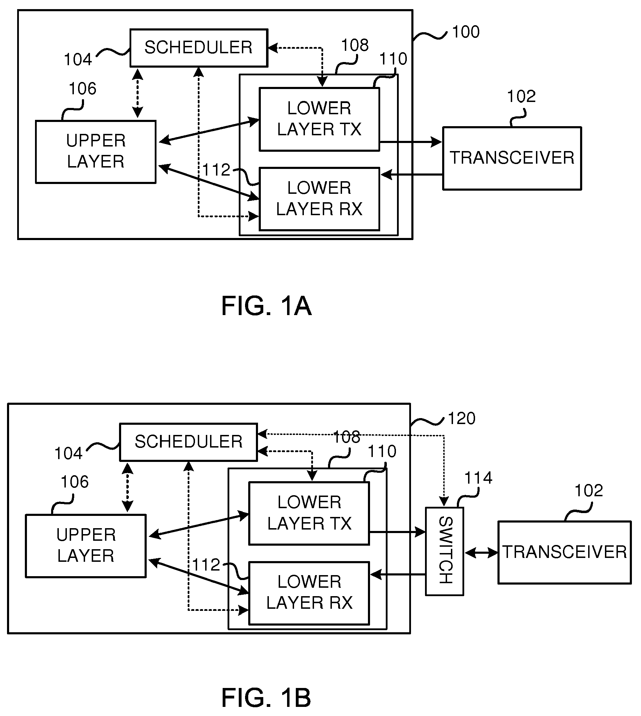

Figure 1A is a block diagram of an example of an application 100 providing a latency critical service. The application 100 may be structured into several different modules, i.e. to a scheduling module 104, an upper layer protocol module 106 and a lower layer protocol module 108. The lower layer protocol module 108 handles real-time critical data units (for example, continuous bit stream or packets with segments of the bits in the stream) to/from at least one transceiver 102. The transceiver 102 refers, for example, to a radio unit including transmitter, receiver and antennas in a wireless system or to a transceiver for optical medium in a wireline system. The transceiver 102 may be a combined transmitter and receiver as well as a separate transmitter and a separate receiver.

The upper layer protocol module 106 receives data units from the lower layer protocol module 108, processes the received data units and forwards data to other upper protocol layers. The upper layer protocol module 106 also receives data to be sent to the lower layer protocol module 108 from other upper layer protocols. The scheduling module 104 may receive measurement reports and other events that are used as basis for scheduling decisions. Dashed lines between the scheduler 104 and the upper layer protocol module 106 and the lower layer protocol module 108 illustrate controlling connections. The scheduler 104 is dynamically controlling transmission of data to the transceiver 102 and reception of data from the transceiver 102.

In one example, the lower layer protocol module 108 may be split into two separate lower layer protocol modules, a lower layer protocol transmitter module 110 and a lower layer protocol receiver module 112, as illustrated in Figure 1A.

Responsibilities of at least one of the lower layer protocol module 108, upper layer protocol module 106 and scheduling module 104 are configured to be migrated to respective modules in a destination application at a destination execution context. In other words, the application 100 executed at a source execution context is migrated to a destination execution context step by step. For example, it is possible to exploit the fact that the modules to be migrated have their real-time critical tasks at different points in time. Therefore, responsibilities of each module in the application 100 may be migrated at a point in time that is suitable for each module.

In one example of Figure 1A, the application 100 may be executed at a source execution context, for example, in a physical machine (e.g. a digital unit in a base station) or in a virtual machine. In another example, the lower layer protocol module is executed in a physical machine (for example, a daughter board) and the upper layer protocol module is executed in a virtual machine on a motherboard.

Figure 1B is a block diagram of another example of an application 120 providing a latency critical service. The application 120 in Figure 1B differs from the application 100 in Figure 1A only in that data units are sent to the transceiver 102 via a switch 114 and received by the lower layer protocol module 108 from the transceiver 102 through the switch 114.

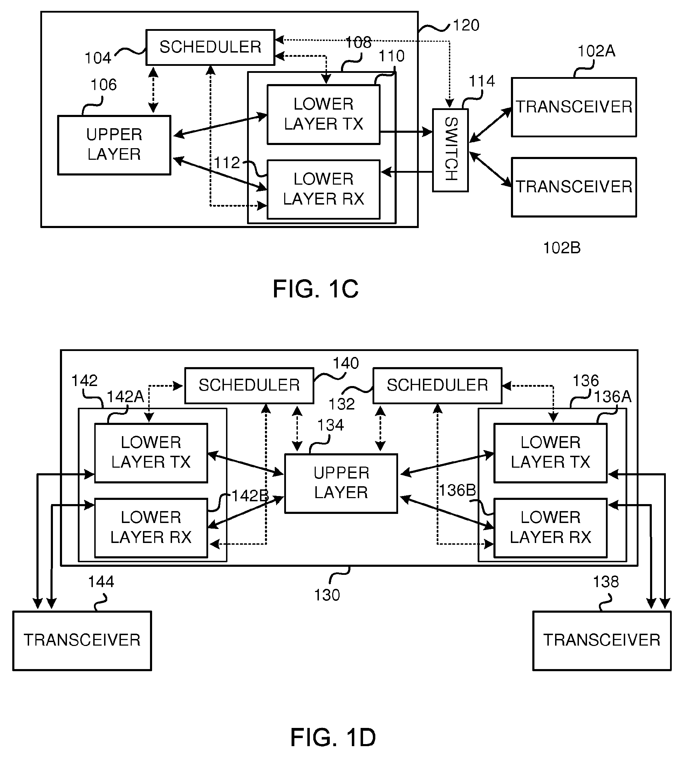

Figure 1C is a block diagram of another example of an application 120 providing a latency critical service. In the example of Figure 1C, there two transceivers 102A, 102B connected to the switch 114. Although Figure 1C illustrates two transceivers, in another example, there may be more than two. The transceivers 102A, 102B may communicate with different end-points or with the same end-point(s). Examples of the end-points include, for example, wireless devices, relay-nodes, and wireline nodes/switches.

Figure 1D is a block diagram of an example of an application 130 providing a latency critical service. The application 130 may be structured into several different modules, i.e. to a scheduling module 132, an upper layer protocol module 134 and a lower layer protocol module 136. The lower layer protocol module 136 may handle real-time critical data units (for example, continuous bit stream or packets with segments of the bits in the stream) to/from at least one transceiver 138. The transceiver 138 refers, for example, to a radio unit including transmitter, receiver and antennas in a wireless system or to a transceiver for optical medium in a wireline system. The transceiver may be a combined transmitter and receiver as well as a separate transmitter and a separate receiver.

The upper layer protocol module 134 receives data units from the lower layer protocol module 136, processes the received data units and forwards data to other upper protocol layers. The upper layer protocol module 134 also receives data to be sent to the lower layer protocol module 136 from other upper layer protocols. The scheduling module 132 may receive measurement reports and other events that are used as basis for scheduling decisions. Dashed lines between the scheduler 132 and the upper layer protocol module 134 and the lower layer protocol module 136 illustrate controlling connections. The scheduler 132 is dynamically controlling transmission of data to the transceiver 138 and reception of data from the transceiver 138.

In one example, the lower layer protocol module 136 may be split into two separate lower layer protocol modules, a lower layer protocol transmitter module 136A and a lower layer protocol receiver module 136B, as illustrated in Figure 1A. Responsibilities of at least one of the lower layer protocol module 136, upper layer protocol module 134 and scheduling module 132 are configured to be migrated to respective modules in a destination application at a destination execution context. In other words, the application 130 executed at a source execution context may be migrated to a destination execution context step by step. For example, it is possible to exploit the fact that the modules to be migrated have their real-time critical tasks at different points in time. Therefore, responsibilities of each module in the application 130 may be migrated at a point in time that is suitable for each module.

The application structure in Figure 1D differs from the application structure in Figure 1A in that in Figure 1D a scheduling module 140 and a lower layer protocol module 142 has been arranged also on the left side of the upper layer protocol module 134. When the upper layer protocol module 134 receives data units from the lower layer protocol module 136, it may process the data units and send the processed data units to the lower layer protocol module 142. Similarly, when the upper layer protocol module 134 receives data units from the lower layer protocol module 142, it may process the data units and send the processed data units to the lower layer protocol module 136. In other words, the upper layer protocol module 134 acts as an intermediate entity between two lower layer protocol modules 136, 142. Dashed lines between the scheduler 140 and the upper layer protocol module 134 and the lower layer protocol module 142 illustrate controlling connections. The scheduler 140 is dynamically controlling transmission of data to a transceiver 144 and reception of data from the transceiver 144. The transceiver 144 refers, for example, to a transceiver for optical medium in a wireline system providing a connection to a back-end network or to a wireless transceiver providing a connection to a back-end network.

The application 130 may be executed at a source execution context, for example, in a physical machine (e.g. a digital unit in a base station) or in a virtual machine. In another example, the lower layer protocol module is executed in a physical machine (for example, a daughter board) and the upper layer protocol module is executed in a virtual machine on a motherboard.

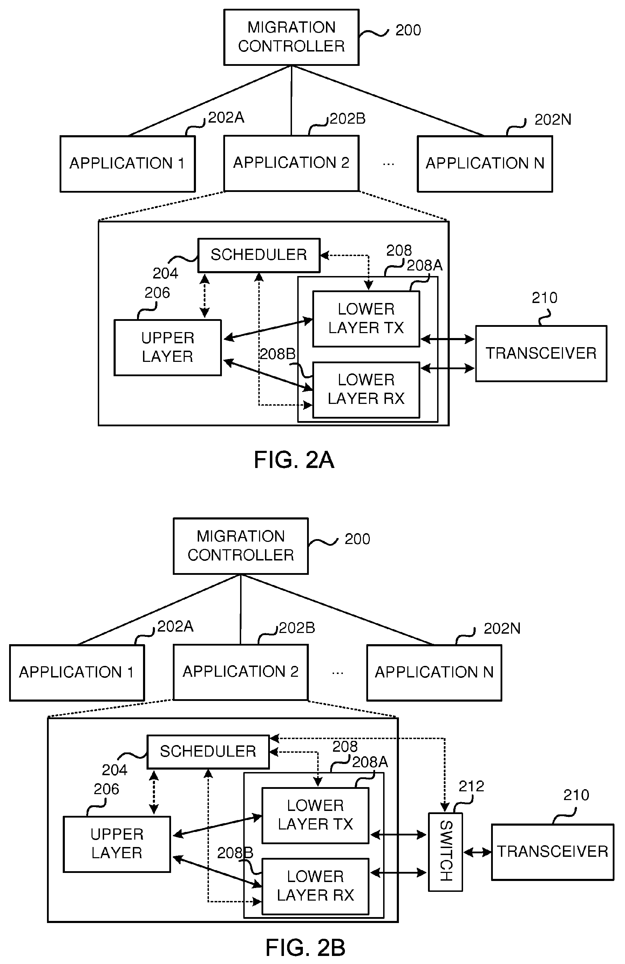

Figure 2A is a block diagram of a computer system for migrating a source application providing latency critical services.

The computer system comprises a plurality of applications 202A, 202B, 202N. Each application 202A, 202B, 202N may be executed in an execution context, for example, in a physical machine (e.g. a digital unit in a base station) or in a virtual machine. A single execution context may execute several applications. In Figure 2A, the application 202B executed at a source execution context is to be migrated to a destination execution context.

The application 202B may be structured into several different modules, i.e. to a scheduling module 204, an upper layer protocol module 206 and a lower layer protocol module 208. In the example of Figure 2A, the lower layer protocol module 208 comprises two submodules, a lower layer protocol transmitter module 208A and a lower layer protocol receiver module 208B. The lower layer protocol module 208 handles real-time critical data units (for example, continuous bit stream or packets with segments of the bits in the stream) to/from at least one transceiver 210. The transceiver 210 refers, for example, to an antenna and a converter making the conversion between analog and digital signals. Further, the transceiver 210 may also refer to a radio unit including transmitter, receiver and antennas in a wireless system or to a transceiver for optical medium in a wireline system. The transceiver 210 may also be a combined transmitter and receiver as well as a separate transmitter and a separate receiver.

The upper layer protocol module 206 receives data units, processes the received data units and forwards data to other upper protocol layers. The upper layer protocol module 206 also receives data to be sent to the lower layer protocol module 208 from other upper layer protocols. The scheduling module 204 may receive measurement reports and other events that are used as basis for scheduling decisions. Dashed lines between the scheduler 204 and the upper layer protocol module 206 and the lower layer protocol module 208 illustrate controlling connections. The scheduler 204 may dynamically control transmission of data to the transceiver 210 and reception of data from the transceiver 210.

In the above regarding the reception of data from the transceiver 210, a shared medium is used. In another example where the medium is not shared the data flow in that direction may be controlled by the entity on the other side (or in the path).

The migration controller module 200 may select which modules of the application 202B need to be migrated. The need for migrating the application 202B or at least one of its modules may result from one or more reasons. For example, there may be an equipment failure affecting the capability of the execution context. Other possible reasons include, for example, load balancing (applications may need to be scaled to more or fewer contexts) and power consumption optimization (consolidation of applications providing services to fewer execution contexts). In yet another example it is possible to migrate only one application module (i.e. a scheduler, an upper layer protocol module 206, a lower layer protocol module) to a destination execution context. In another embodiment, the migrated application module may even be migrated back to the original source execution context.

The migration controller module 200 may also select the destination execution context to which at least one of modules of the application 202B are to be migrated. Finally, the migration controller module 200 controls the migration of the responsibilities of the modules to be migrated to respective modules at an application in the destination execution context.

In one modified example of Figure 2A, the radio transceiver 210 may be integrated with the lower layer protocol module 208 and the migration of the lower layer protocol module 208 is done to a destination execution context including another radio transceiver. In that case the synchronization of the output from the source execution context and the destination execution context may be synchronized in the receiver (end-point) on the other side of the medium(s) handled by the transceiver(s).

In one modified example of Figure 2A, an application may be realized by several execution contexts. In other words, application modules may be distributed on different execution contexts.

Figure 2B is another block diagram of a computer system for migrating a source application providing latency critical services. The example disclosed in Figure 2B differs from the example disclosed in Figure 2A only in that the lower layer protocol module 208 receives/transmits data units through a switch 212, and the switch 212 is configured to receive data units from the transceiver 210 and to forward them to the lower layer protocol module 208 and to send data units received from the lower layer protocol module 208 to the transceiver 210.

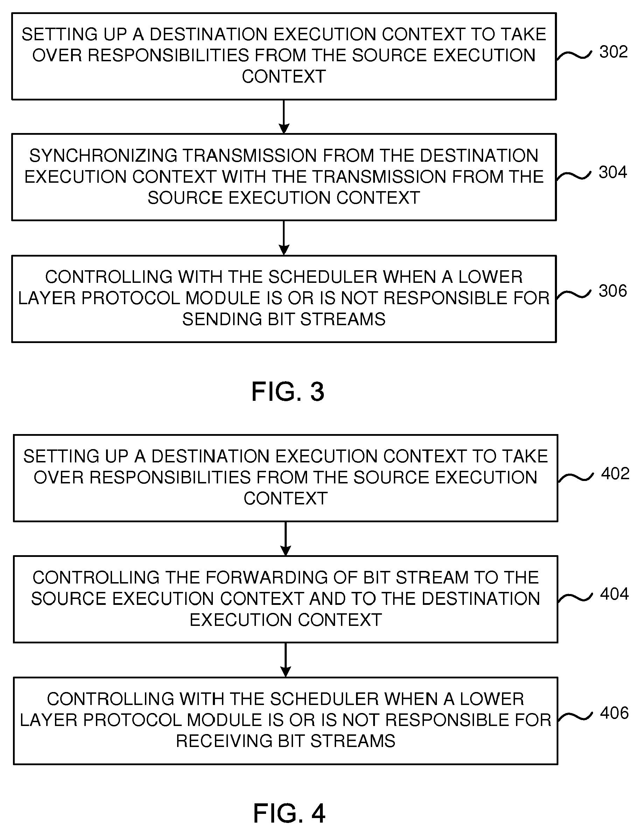

Figure 3 is a flow diagram illustrating migration of the responsibility of transmitting data units to a transceiver from a source execution context to a destination execution context. For better understanding, reference numbers from Figures 2A and 2B are used in the description of Figure 3.

At 302, the migration controller 200 sets up a destination execution context so that responsibilities of a lower layer protocol module can be migrated to a lower layer protocol module of an application executed at the destination execution context. In the setup, a snapshot of the lower layer protocol module state in the source execution context may also be transferred to the destination execution context. The state transfer may refer to a transfer of an internal state or a configuration of the destination context according to the source context configuration. In one example, the state may comprise information not associated with each transmission of a data unit, for example, timing offset, information about transmission queues, and transceiver addressing.

At 304, the transmission from the destination execution context is synchronized with the transmission from the source execution context so that the timing difference of received data units from the two execution contexts is minimized at a transceiver 210. In another example, if also the transceiver changes, the synchronization is done to minimize the timing difference at the end-point.

The synchronization may be performed, for example, by measuring the timing difference between two received transmission flows (or reference signals). The two flows have different paths from the corresponding execution context to the transceiver 210. The measurement may be performed at a location that is common for both execution contexts, i.e. in the switch 212 or in the transceiver 210. The synchronization of the destination execution context could be abrupt by setting a wanted timing offset in the destination execution context based on the measurement or smooth with a control process that ensures that the destination execution context drifts to the right timing offset. In one example, the abrupt mechanism is applied first and after the streaming of data units is started then the smooth mechanism is applicable.

The measurement may be realized by measuring the difference of the timing of the two flows or by measuring the difference of timing for each flow towards a common reference. Identification of which flows to measure the timing difference on may be implicit by detecting the same destination address of the flows, but different source addresses (here source and destination is not referring to source/destination execution context, but the sending address and the receiving address of a single flow). It may also be explicit by requesting the measurement. The request may come, for example, from the destination execution context or the migration controller or the scheduler.

At 306, the scheduler 204 controls when a lower layer protocol module shall be responsible for sending data units to the transceiver 210 as well as when a lower layer protocol module is not responsible for sending data units to the transceiver 210.

In one example, only one lower layer protocol module is sending data units to the transceiver 210 at a time so the application at the source execution context is responsible for data unit transmission in Transmission Time Interval (TTI) N (or at a point of time appropriate to a frame structure used) and the application at the destination execution context is responsible for transmission data units in TTI N+1. The scheduler 204 instructs the upper layer protocol module 206 to send data for processing to the lower layer protocol transmitter module 208A in the source execution context for TTI N. Further, the scheduler 204 instructs the upper layer protocol module 206 to send data for processing to the lower layer protocol transmitter module in the application at the destination execution context for TTI N+1.

In another example, multiple lower layer protocol modules may be sending the same data units to the transceiver 210 at the same time during a transition period. The scheduler 204 instructs directly or indirectly via the upper layer protocol module both lower layer protocol transmitter modules to transmit the same data unit flow to the transceiver 210 at the same time. A switch 212 that is synchronized with the timing of the data units receives both data unit flows and is able to decide (for example, based on a configuration/command from the scheduler 204 or the migration controller 200) which data unit flow is forwarded to the transceiver 210.

In another example, multiple lower layer protocol modules are sending the same data units to the transceiver 210 at the same time. The scheduler 204 may instruct the upper layer protocol module to send data for processing both to the lower layer protocol module 208 at the source execution context and to a lower layer protocol module at the destination execution context. The scheduler 204 may instruct both lower layer protocol entities to transmit the same data units to the transceiver at the same time. A switch 212 that is synchronized with the timing of the bit streams receives both data unit flows and is able to decide, based on configuration/command from the scheduler 204 (or migration controller 200), which data unit flow is forwarded to the transceiver 210.

In another example, multiple lower layer protocol modules are sending the same data unit flow to the transceiver 210 at the same time. The scheduler 204 instructs the upper layer protocol module 206 to send data for processing to both the lower layer protocol transmitter module 208A at the source execution context and the lower layer protocol transmitter module at the destination execution context. Both lower layer protocol modules then transmit the same data unit flow to the transceiver 210, and the transceiver 210 selects one of them.

In the above examples of Figure 3, the Media Access Control (MAC)/Radio Link Protocol (RLC) layer may reside in the upper layer protocol entity. In another example, the MAC/RLC layer is arranged in the lower layer protocol transmitter module. In this case, the scheduler 204 may instruct the source lower layer protocol transmitter module to send data units to the transceiver 210 in TTI N and the destination lower layer protocol transmitter module to send data units to the transceiver 210 in TTI N+1. In another example the scheduler 204 may instruct both the source lower layer protocol transmitter module and the destination lower layer protocol transmitter module to send data units to the transceiver 210 at the same time. A switch 212 that is synchronized with the timing of the data units receives both data unit flows and is able to decide (for example, based on a configuration/command from the scheduler 204 or the migration controller 200) which data unit flow is forwarded to the transceiver 210. Yet in another example, the scheduler 204 may instruct both the source lower layer protocol transmitter module and the destination lower layer protocol transmitter module to send data units to the transceiver 210 at the same time, and the transceiver 210 selects one of them.

When the migration of the responsibility of transmitting data units to the transceiver from the source execution context to the destination execution context has been executed, it is possible to free the resources reserved for the source lower layer protocol entity. The scheduler 204 may inform the migration controller 200 that/when it is no longer using the lower layer protocol module in the source execution context so that the migration controller 200 may trigger release of the lower layer protocol module at the source execution context.

Figure 4 is a flow diagram illustrating migration of the responsibility of receiving data units sent by a transceiver, for example, a radio transceiver, from a source execution context to a destination execution context. For better understanding, reference numbers from Figures 2A and 2B are used in the description of Figure 4.

At 402, the migration controller 200 sets up a destination execution context so that responsibilities of a lower layer protocol module can be migrated to a lower layer protocol module of an application executed at the destination execution context. In the setup, a snapshot of the lower layer protocol module state in the source execution context is transferred to the destination execution context. The state transfer may refer to a transfer of an internal state or a configuration of the destination context according to the source context configuration. In one example, the state may comprise at least one of information associated to reception not controlled by the scheduler or to information associated to reception controlled by the scheduler, but not associated with each reception of a data unit, for example timing offset, information about reception queues or addressing.

At 404, the transceiver 210 or the switch 212 controls the forwarding of data units to the source and destination execution contexts. In one example, the transceiver 210 or the switch 212 switches the forwarding of data units from the lower layer protocol module 208 at the source destination context to a lower layer protocol module at the destination execution context at a defined point within the data units (between TTI M and TTI M+1). In another example, the transceiver 210 or the switch 212 is forwarding the data units both to the lower layer protocol module 208 at the source execution context and to the lower layer protocol module at the destination execution context. In another example, the lower layer module in the source execution context forwards the data units to the destination execution context.

At 406, the scheduler 204 of the source execution context or of the destination execution context controls when a lower layer protocol module is responsible for receiving data units from the transceiver 210 or from the switch 212 and when a lower layer protocol module is no longer responsible for receiving data units from the transceiver 210 or from the switch 212. For example, in Transmission Time Interval (TTI) M the lower layer protocol module 208 is responsible for receiving data units from the transceiver 210 or from the switch 212, and in TTI M+1 the lower layer protocol module at the destination execution context is responsible for receiving the data units from the transceiver 210 or from the switch 212.

When the lower layer protocol module is no longer responsible at the source execution context for receiving data units from the transceiver 210 or from the switch 212, it is possible to free the resources reserved for the lower layer protocol module. The scheduler 204 may inform the migration controller 200 that/when it is no longer using the lower layer protocol module in the source execution context so that the migration controller 200 may trigger release of the lower layer protocol module at the source execution context.

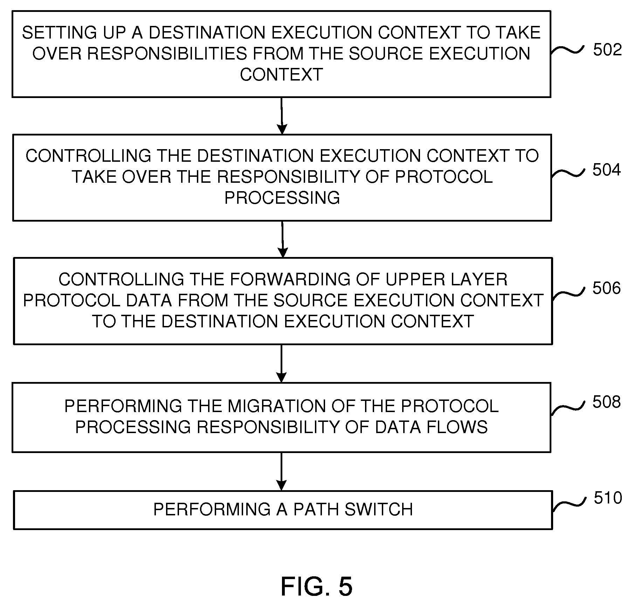

Figure 5 is a flow diagram illustrating migration of the responsibility of the upper layer protocol processing from a source execution context to a destination execution context. For better understanding, reference numbers from Figures 2A and 2B are used in the description of Figure 5.

At 502, the migration controller 200 sets up a destination execution context so that responsibilities of an upper layer protocol module can be migrated to an upper layer protocol module of an application executed at the destination execution context. In the setup, a snapshot of the upper layer protocol module state in the source execution context is transferred to the destination execution context. In one example, the migration controller 200 reads the state from source upper layer protocol module and writes it to destination upper layer protocol module. In another example, the migration controller orders the source upper layer protocol module to transfer the state to the destination upper layer protocol module. The source upper layer protocol module may also send updates of its state to the destination upper layer protocol module while the migration is progressing. In one example, the state may comprise information about setup flows and queues or information about protocol state.

At 504, the destination execution context is controlled, for example, by the migration controller 200 to take over the responsibility of protocol processing.

At 506, the forwarding of upper layer protocol data is controlled from the source execution context to the destination execution context. The source upper layer protocol module forwards what it receives above (for example, from a serving gateway) to the destination upper layer protocol module so that the serving gateway does not initially have to change destination address of the data flow. The destination address is changed later in a path switch. Further, the source upper layer protocol module forwards the processed data flows it receives from lower layer protocol module to the destination upper layer protocol module that has taken over the responsibility.

At 508, the migration of the protocol processing responsibility of each data flow (for example, logical channel) and each group of data flows (for example, logical channels associated with one user equipment instance) is performed so that processing of the data flow in the source upper protocol module is finished and transferred to the destination upper protocol module while upholding the QoS requirements. The scheduler 204 is controlling one sub-set of not yet transferred data flows associated to the source upper layer protocol module and another sub-set of transferred data flows associated to the destination upper layer protocol module during the migration.

The scheduling of transmission may be performed in such a way that finishing the processing of the data flows of the sub-set in the source upper layer protocol module is prioritized before processing of transferred data flows of the sub-set in the destination upper layer protocol module, while upholding the QoS requirements of the data flows.

The data forwarding of the data flows received in the source upper layer protocol module from the lower layer protocol module is performed so that when the processing of a data flow is finished then the following data received in that flow is forwarded unprocessed to the destination upper layer protocol module for processing there.

The lower layer protocol module is controlled to forward groups of data flows directly to the destination upper layer protocol module when the processing of that group is finished in the source upper layer protocol module.

At 510, a path switch is initiated by the destination upper layer protocol module. In other words, the data flow earlier received by the source upper layer protocol module 206 (for example, from a serving gateway) is now directed to the upper layer protocol module at the destination execution context. The source upper layer protocol module 206 continues to forward any received data flows to the destination upper layer protocol module.

When the patch switch has been performed, the source execution context may be released. The migration controller 200 may release the source execution context. The upper layer protocol module in the source execution context may linger for a while to catch any late packets before being released.

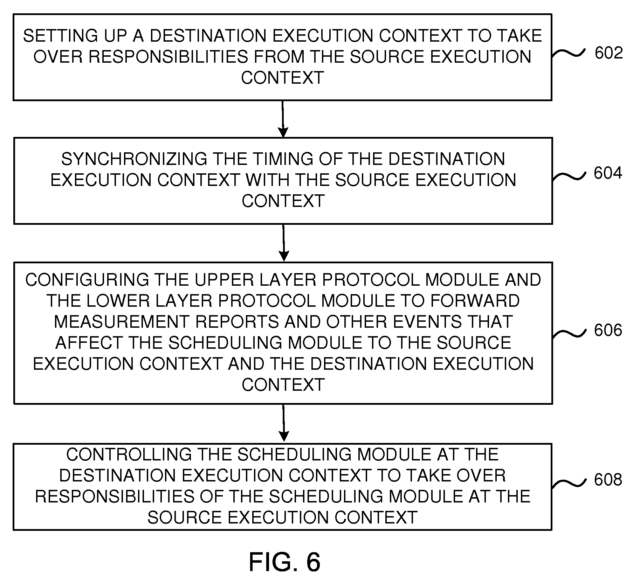

Figure 6 is a flow diagram illustrating migration of the responsibility of a scheduling module from a source execution context to a destination execution context. For better understanding, reference numbers from Figures 2A and 2B are used in the description of Figure 6.

At 602, the migration controller 200 sets up a destination execution context so that responsibilities of a scheduling module can be migrated to a scheduling module of an application executed at the destination execution context. In the setup, a snapshot of the scheduling module 202 state in the source execution context may be transferred to the destination execution context. The state transfer may refer to a transfer of an internal state or a configuration of the destination context according to the source context configuration. The source scheduling module may forward its scheduling decisions to the destination scheduling module to keep the state of the two schedulers up to date. In one example, the state may comprise at least one of information of available channel and compute resources, information of setup flows, or channel state information.

At 604, the timing of the destination execution context is adjusted so that the timing of the output of the destination scheduling module is synchronized with the timing of the output of the source scheduling module at the upper layer protocol module and lower layer protocol module. The destination execution context may have different delays from the scheduling module to the applicable protocol module compared to the source execution context. The scheduling module may be triggered at a certain point in time in advance to the transmission of data units by the lower layer protocol module, so that the scheduling module will be able to make the scheduling decision and the protocol module will be able to assemble the data, process it and send the data unit to the transceiver. When the timings are synchronized, this means that the timings are within a certain (timing) window.

At 606, the upper layer protocol module and the lower layer protocol module are configured (for example, by the scheduler) to forward measurement reports and other events that affect the scheduling module to the source execution context as well as the destination execution context.

At 608, the scheduling module at the destination execution context may make the decision when to take over responsibilities of the scheduling module at the source execution context. The scheduling module at the destination execution context may, for example, request control from the scheduling module at the source execution context. In another example, if the scheduling module at the destination execution context detects that the scheduling module at the source execution context has failed, the scheduling module at the destination execution context may take over by itself.

When the scheduling module at the destination execution context has made the decision to take over responsibilities of the scheduling module at the source execution context, the resources reserved for the scheduling module at the source execution context may be released. The scheduling module of the destination execution context may inform the migration controller so that the migration controller may trigger release of the scheduling module at the source execution context.

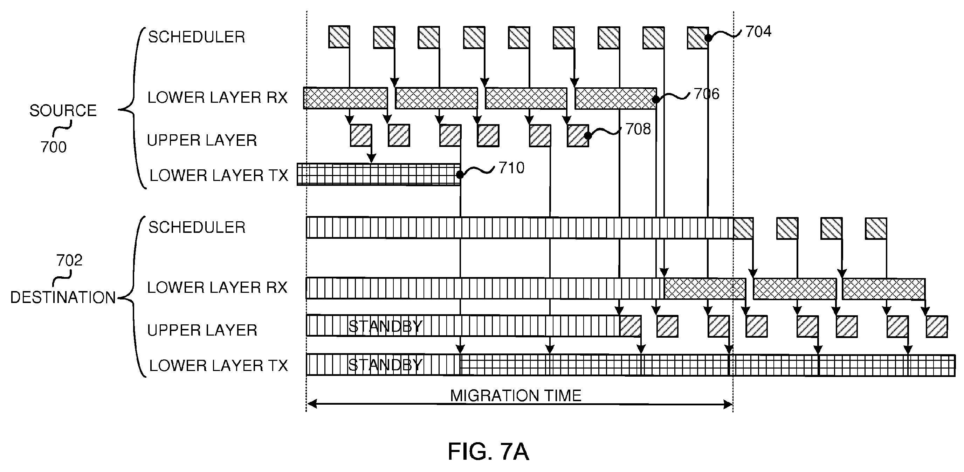

Figure 7A illustrates an example of migrating a scheduling module, an upper layer protocol module, a lower layer protocol receiver module and a lower layer protocol transmitter module from a source execution context 700 to a destination execution context 702. Figure 7A discloses that the four application modules are migrated in separate migration points in time. It is to be noted that Figure 7A illustrates only one example of the order and timing of the application module migration. In another example, the order of the migration of the application modules may be different and some of the modules may be migrated in parallel.

In the example of Figure 7A, the scheduling module sends events to the lower layer protocol receiver module and to the upper layer protocol module, and these events trigger other events as disclosed in Figure 7A.

Figure 7A discloses four separate migration points 704, 706, 708 and 710. The lower layer protocol transmitter module of the source execution context 700 is migrated first at point 710. After the migration point 710 the upper layer protocol module of the source execution context 700 sends data to the lower layer protocol transmitter module of the destination execution context 702.

The upper layer protocol module of the source execution context 700 is migrated at the migration point 708. After the migration point 708, the scheduling module of the source execution context 700 controls operations of the upper layer protocol module of the destination execution context 702.

The lower layer protocol receiver module of the source execution context 700 is migrated at the migration point 706. After the migration point 706, the lower layer protocol receiver module of the source execution context 700 sends data units to the upper layer protocol modules of the destination execution context 702. Further, the lower layer protocol receiver module of the destination execution context 702 starts receiving data units from a transceiver, for example, a radio unit, and the lower layer protocol receiver module of the destination execution context 702 passes the received data units to the upper layer protocol module of the destination execution context 702.

The scheduling module of the source execution context 700 is migrated at the migration point 704. After the migration point 704, the scheduling module of the destination execution context 702 is responsible for controlling operations of the lower layer protocol transmitter module, the lower layer protocol receiver module and the upper layer protocol module of the destination execution context 702.

The example disclosed in Figure 7A exploits the fact that each execution context entity has its real-time critical tasks at different points of time. When responsibilities of an entity are migrated to a destination execution context, the migration is made at a point in time that is suitable for each entity.

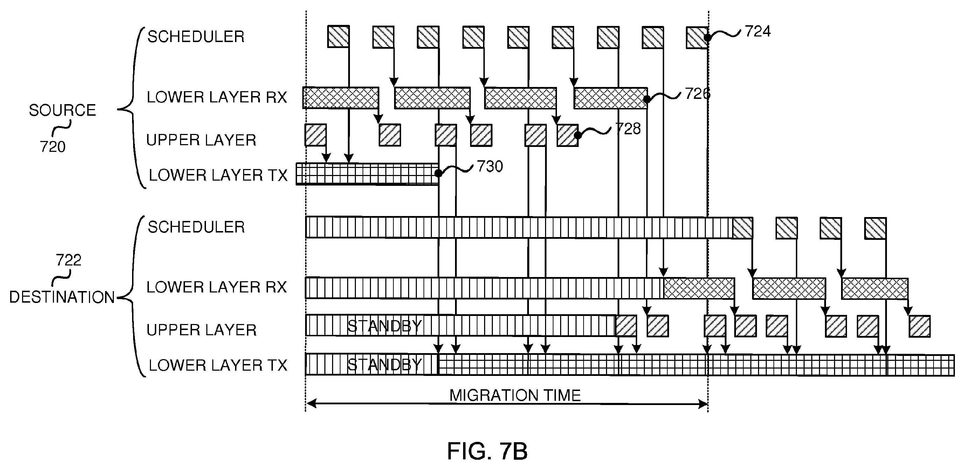

Figure 7B illustrates an example of migrating a scheduling module, an upper layer protocol module, a lower layer protocol receiver module and a lower layer protocol transmitter module from a source execution context 720 to a destination execution context 722.

Figure 7B discloses that the four application modules are migrated in separate migration points in time. It is to be noted that Figure 7B illustrates only one example of the order and timing of the application module migration. In another example, the order of the migration of the application modules may be different and some of the modules may be migrated in parallel.

In the example of Figure 7B, the scheduling module sends events to the lower layer protocol receiver module and to the lower layer protocol transmitter module, and these events trigger other events as disclosed in Figure 7B.

Figure 7B discloses four separate migration points 724, 726, 728 and 730. The lower layer protocol transmitter module is migrated first at point 730. After the migration point 730 the upper layer protocol module of the source execution context 720 sends data to the lower layer protocol transmitter module of the destination execution context 722.

The upper layer protocol module of the source execution context 720 is migrated at the migration point 728. After the migration point 728, the scheduling module of the source execution context 720 controls operations of the upper layer protocol module of the destination execution context 722.

The lower layer protocol receiver module of the source execution context 720 is migrated at the migration point 726. After the migration point 726, the lower layer protocol receiver module of the source execution context 720 sends data units to the upper layer protocol modules of the destination execution context 722. Further, the lower layer protocol receiver module of the destination execution context 722 starts receiving data units from a transceiver, for example, a radio unit, and the lower layer protocol receiver module of the destination execution context 722 passes the received data units to the upper layer protocol module of the destination execution context 722.

The scheduling module of the source execution context 720 is migrated at the migration point 724. After the migration point 724, the scheduling module of the destination execution context 722 is responsible for controlling operations of the lower layer protocol transmitter module, the lower layer protocol receiver module and the upper layer protocol module of the destination execution context 722.

The example disclosed in Figure 7B exploits the fact that each execution context entity has its real-time critical tasks at different points of time. When responsibilities of an entity are migrated to a destination execution context, the migration is made at a point in time that is suitable for each entity.

The examples illustrated above enable a live migration of application with no downtime of services. Further, the examples provide an architecture that enables scaling of different application module entities based on load.

As a summary regarding the differences of Figure 7A and 7B examples, Figure 7A provides an example where the MAC/RLC layer resides in the upper layer protocol entity whereas Figure 7B provides an example where the MAC/RLC layer is arranged in the lower layer protocol transmitter module.

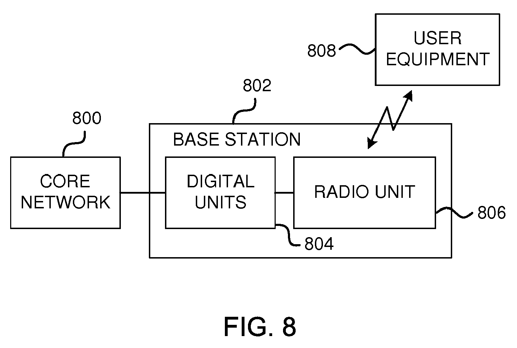

Figure 8 illustrates an example of an environment of migrating an application providing latency critical service. A base station 802 is connected to a core network 800. The base station 802 comprises a plurality of digital units 804 and at least one radio unit 806 connected to the digital unit 804. User equipment 808 is wirelessly connected to the radio unit 806. A radio unit 806 refers, for example, to a transceiver comprising an antenna and a converter making the conversion between analog and digital signals.

Each of the digital units 804 provides an execution context to at least one application providing latency critical services. As described in earlier examples above, an application may be migrated from one execution context to another and at the same time it is possible to maintain service level with no downtime.

The methods described herein may be performed by software in machine readable form on a tangible storage medium e.g. in the form of a computer program comprising computer program code means adapted to perform all the steps of any of the methods described herein when the program is run on a computer and where the computer program may be embodied on a computer readable medium. Examples of tangible storage media include computer storage devices comprising computer-readable media such as disks, thumb drives, memory etc. and do not include propagated signals. Propagated signals may be present in a tangible storage media, but propagated signals per se are not examples of tangible storage media. The software can be suitable for execution on a parallel processor or a serial processor such that the method steps may be carried out in any suitable order, or simultaneously.

This acknowledges that software can be a valuable, separately tradable commodity. It is intended to encompass software, which runs on or controls "dumb" or standard hardware, to carry out the desired functions. It is also intended to encompass software which "describes" or defines the configuration of hardware, such as HDL (hardware description language) software, as is used for designing silicon chips, or for configuring universal programmable chips, to carry out desired functions.

Alternatively, or in addition, the functionally described herein can be performed, at least in part, by one or more hardware logic components. For example, and without limitation, illustrative types of hardware logic components that can be used include Field-programmable Gate Arrays (FPGAs), Application-specific Integrated Circuits (ASICs), Application-specific Standard Products (ASSPs), System-on-a-chip systems (SOCs), Complex Programmable Logic Devices (CPLDs), etc.

All or a portion of the example embodiments can be conveniently implemented using one or more general purpose processors, microprocessors, digital signal processors, micro-controllers, and the like, programmed according to the teachings of the example embodiments, as will be appreciated by those skilled in the computer and/or software art(s). Appropriate software can be readily prepared by programmers of ordinary skill based on the teachings of the example embodiments, as will be appreciated by those skilled in the software art. Thus, the example embodiments are not limited to any specific combination of hardware and/or software.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item refers to one or more of those items.

The steps of the methods described herein may be carried out in any suitable order, or simultaneously where appropriate. Additionally, individual blocks may be deleted from any of the methods without departing from the spirit and scope of the subject matter described herein. Aspects of any of the examples described above may be combined with aspects of any of the other examples described to form further examples without losing the effect sought.

The term 'comprising' is used herein to mean including the method blocks or elements identified, but that such blocks or elements do not comprise an exclusive list and a method or apparatus may contain additional blocks or elements.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from the spirit or scope of this specification.

## Claims

1. A computer system for migrating a source application providing latency critical services, the computer system comprising:
a migration controller module;
a source application comprising a source lower layer protocol module for receiving real-time critical data units from a transceiver and for sending real-time critical data units to the transceiver, a source upper layer protocol module for receiving information from the lower layer protocol module and for providing information to the lower layer protocol module; and a source scheduling module for dynamically controlling transmission of data units to the transceiver and reception of data units from the transceiver with the source lower layer protocol module and the source upper layer protocol module;
a destination application comprising a destination lower layer protocol module for receiving real-time critical data units from the transceiver and for sending real-time critical data units to the transceiver, a destination upper layer protocol module for receiving information from the lower layer protocol module and for providing information to the lower layer protocol module; and a destination scheduling module for dynamically controlling transmission of data units to the transceiver and reception of data units from the transceiver with the destination lower layer protocol module and the destination upper layer protocol module;
wherein, during a migration phase, the migration controller module is configured to
select at least one of the source lower layer protocol module, source upper layer protocol module and source scheduling module;
and
cause migration of the responsibilities of the selected source modules module by module to respective modules at the destination application.

2. The computer system according to claim 1, wherein the source lower layer protocol module, the source upper layer protocol module and the source scheduling module are provided by the source application executed in single source execution context, and the source lower layer protocol module, the source upper layer protocol module and the source scheduling module are configured to be migrated module by module to the destination application executed in a single destination execution context.

3. The computer system according to claim 1, wherein the modules of the source application are provided by the source application distributed in multiple source executions contexts, and the source lower layer protocol module, the source upper layer protocol module and the source scheduling module are configured to be migrated module by module to the destination application executed in a single destination execution context.

4. The computer system according to claim 1, wherein the source lower layer protocol module, the source upper layer protocol module and the source scheduling module are provided by the source application executed in single source execution context, and the source lower layer protocol module, the source upper layer protocol module and the source scheduling module are configured to be migrated module by module to the destination application distributed in multiple destination execution contexts.

5. The computer system according to claim 1, wherein the source lower layer protocol module, the source upper layer protocol module and the source scheduling module are provided by the source application distributed in multiple source execution contexts, and the source lower layer protocol module, the source upper layer protocol module and the source scheduling module are configured to be migrated module by module to the destination application distributed in multiple destination execution contexts.

6. The computer system according to any of claims 1 - 5, wherein
the migration controller module is configured to cause transmission of a snapshot of the state of the lower layer protocol module to the destination lower layer protocol module;
the migration controller module is configured to cause synchronization of the transmission from the lower layer protocol module in the destination execution context with the transmission from the lower layer protocol module in the source execution context; and
the source scheduling module or the destination scheduling module is configured to control when the source lower layer protocol module or the destination lower layer protocol module is responsible for sending data units to the transceiver.

7. The computer system according to claim 6, wherein the source scheduling module or the destination scheduling module is configured to:
control the source upper layer protocol module to provide information to the source lower layer module for transmission time interval N; and
control the source upper layer protocol module to provide information to the destination lower layer module for transmission time interval N+1.

8. The computer system according to claim 6, further comprising a switch configured to receive real-time critical data units, and wherein the source scheduling module or destination scheduling module is configured to:
control the source upper layer protocol module to provide information to the source lower layer module and to the destination lower layer module;
wherein the source lower layer module and the destination lower layer module are configured to send real-time critical data units to the switch; and
wherein the switch is configured to send the real-time critical data units from the source lower layer module for transmission time interval N and from the destination lower layer module for transmission time interval N+1 to the transceiver.

9. The computer system according to claim 6, wherein the source scheduling module or destination scheduling module is configured to:
control the source upper layer protocol module to provide information to the source lower layer module and to the destination lower layer module;
wherein the source lower layer protocol module and the destination lower layer module are configured to send real-time critical data units to the transceiver; and
wherein the transceiver is configured to select data units from the source lower layer protocol module for transmission time interval N and from the destination lower layer module for transmission time interval N+1.

10. The computer system according to any of claims 1 - 5, wherein
the migration controller module is configured to cause transmission of a snapshot of the state of the lower layer protocol module to the destination lower layer protocol module;
the transceiver is configured to forward data units to the source lower layer protocol module for transmission time interval N and to forward data units to the destination lower layer protocol module for transmission time interval N+1; and
wherein the source scheduling module or the destination scheduling module is configured to:
control the source lower layer protocol module to be responsible for receiving data units from the transceiver for transmission time interval N; and
control the destination lower layer protocol module to be responsible for receiving data units from the transceiver for transmission time interval N + 1.

11. The computer system according to any of claims 1 - 5, wherein
the migration controller module is configured to cause transmission of a snapshot of the state of the lower layer protocol module to the destination lower layer protocol module;
the transceiver is configured to forward data units to the source lower layer protocol module and to the destination lower layer protocol module; and
wherein the source scheduling module or the destination scheduling module is configured to:
control the source lower layer protocol module to be responsible for receiving data units from the transceiver for transmission time interval N; and
control the destination lower layer protocol module to be responsible for receiving data units from the transceiver fror transmission time interval N + 1.

12. The computer system according to any of claims 1 - 5, wherein:
the migration controller module is configured to cause transmission of a snapshot of the state of the source scheduling module to the destination scheduling module;
the migration controller module is configured to synchronize the timing of the destination scheduling module with the timing of the source scheduling module; and
the destination scheduling module is configured to determine when to take over responsibilities of the source scheduling module.

13. The computer system according to any of claims 1 - 5, wherein the migration controller module is configured to cause transmission of a snapshot of the state of the source upper layer protocol module to the destination upper layer protocol module;
wherein the migration controller module is configured to cause the destination execution context to take over the responsibility of protocol processing;
wherein the source upper layer protocol module is configured to forward information to the destination upper layer protocol module; and
wherein the destination upper layer protocol module is configured to initiate a path switch from the source upper layer protocol module to the destination upper layer protocol module.

14. The computer system according to any of claims 1 - 13, wherein the lower layer protocol module comprises a lower layer protocol receiver module for receiving the real-time critical data units from the transceiver and a lower layer protocol transmitter module for sending the real-time critical data units to the transceiver.

15. The computer system according to any of claims 1 - 14, wherein the source and destination scheduling modules are configured to control respective lower layer protocol modules to receive information from the transceiver and to control respective upper layer protocol modules to transmit information to the transceiver via the respective lower layer protocol modules.

16. The computer system according to any of claims 1 - 14, wherein the source and destination scheduling modules are configured to control respective lower layer protocol modules to receive information from the transceiver and to control the respective lower layer protocol modules to transmit information to the transceiver.

17. The computer system according to any of claims 1 - 16, wherein the source scheduling module is configured to control at least one of the destination lower layer protocol module and the destination upper layer protocol module during the migration phase.

18. The computer system according to any of claims 1 - 16, wherein the destination scheduling module is configured to control at least one of the source lower layer protocol module and the source upper layer protocol module during the migration phase.

19. A computer system comprising a source application for providing latency critical services, the source application comprising:
a lower layer protocol module for receiving real-time critical data units from a transceiver and for sending real-time critical data units to the transceiver;
an upper layer protocol module for receiving information from the lower layer protocol module and for providing information to the lower layer protocol module; and
a scheduling module for dynamically controlling transmission of data units to the transceiver and reception of data units from the transceiver with the lower layer protocol module and the upper layer protocol module;
wherein responsibilities of at least one of the lower layer protocol module, upper layer protocol module and scheduling module are configured to be migrated module by module to respective modules in a destination application.
